# EUROPEAN PATENT SPECIFICATION

(11) **EP 0 541 096 B1**
(45) Date of publication and mention of the grant of the patent: **24.09.1997**
(21) Application number: 92118985.8
(22) Date of filing: 05.11.1992
(51) Int. Cl.: A46B 5/00, B25G 3/32, F16B 39/08

(54) **Toothbrush**
Zahnbürste
Brosse à dents

(30) Priority: 06.11.1991 DE 4136537
(43) Date of publication of application: 12.05.1993
(73) Proprietor: JOHNSON & JOHNSON CONSUMER PRODUCTS, INC., Skillman, New Jersey 08558-9418 (US)
(72) Inventor: Jeannet, Roland, W-4000 Düsseldorf 1 (DE); Leutwyler, Robert, CH-8113 Boppelsen (CH); Leutwyler, Werner, CH-8053 Zürich (CH)
(74) Representative: Strehl Schübel-Hopf Groening & Partner

(56) References cited:
- DE-U- 8 607 168
- GB-A- 393 154
- US-A- 1 942 931

## Description

The invention relates to a toothbrush in accordance with the preamble of claim 1.

A toothbrush of this generic type is known from US-A-1 942 931. This known toothbrush is provided with a brush head having an integral neck provided with a secure means of attaching the head to the handle by securing by a threaded stem inside the threaded end of the neck. The handle has an axial bore having at one end an axial socket to receive a stem extension so that the end of the extension seats upon a shoulder at the bottom of the socket at the same time that the end of a collar of the stem seats upon the end of the handle to ensure a seal against the entrance of water into the interior of the handle for affecting clamping of the head to the handle. A clamping bolt has a head at one end and is threaded at the opposite end which passes through an aperture in the interior of the handle giving access to the socket. The stem extension is provided with an axial bore which is internally threaded to receive the threaded end of the clamping bolt so that, as the bolt head seats at one end of the handle, the threaded end of the bolt draws the stem extension and the connected head down upon the opposite end of the handle. In order to prevent rotation of the head relative to the handle, a cross pin extends through the stem extension beneath the collar and in the end of the handle. End-facing notches or grooves are provided to receive the projecting end of this cross pin.

The object on which the invention is based is to configure the toothbrush of the above-mentioned known generic type in such a way that the brush head can be secured on the brush handle rapidly, reliably and in a manner secure against release of the connection by children, whatever the shape of the brush handle and brush head, with as large as possible a saving of material for the replaceable brush head.

The invention solves this object by virtue of the features as disclosed in the characterizing portion of claim 1. Accordingly, the threaded pin is mounted in an axial sliding bearing in the front end of the brush handle in such a way that it can be moved to a limited extent axially out of the brush handle, counter to the force of a prestressing device, but cannot be rotated, and is provided at its front end with a thread which can be screwed into the threaded hole of the brush head, a stop catch projecting axially from the rear end of the brush, head, to which catch there corresponds an axial recess in the front end of the brush handle, with the result that, when the brush head is screwed onto the threaded pin, the brush head is supported on the front end of the brush handle by means of the stop catch and the threaded pin can be pulled out counter to the action of the prestressing device until the stop catch engages in the recess in the brush handle.

It is especially advantageous if the front end of the brush handle, which accommodates the sliding bearing, is formed by that end of a brush-handle neck which adjoins the brush head, and the threaded hole is integrated into a bristle bed which accommodates the bristles of the brush head. By virtue of this close arrangement of the threaded connection on the brush head, as great as possible a saving of material can be achieved for the disposable brush head.

In this arrangement, a centring ring can be arranged at an axial distance from the thread, at the front end of the threaded pin, and a smooth cylindrical portion of the threaded hole, the said portion being situated in the region of the mouth of the threaded hole in the brush head, can serve to receive the centring ring. It may furthermore be expedient if the diameters of the thread and of the centring ring of the threaded pin are larger than the shank of the threaded pin, which is displaceably mounted in the brush handle. The thread and the centring ring can here have the same diameter. In this way, a high strength of the connection between the brush head and the brush handle is achieved.

The axial sliding bearing for the threaded pin in the brush handle can be bounded by a transverse wall which serves as a stop for at least one stop element on the threaded pin, the rear end of which passes axially through a bore in the transverse wall and which is connected to one part of the prestressing device, the other part of which is secured in the brush handle. The prestressing spring can be designed as a compression spring or, alternatively, as a tension spring. A child-proof connection between the brush handle and the brush head can be achieved by selection of a suitable spring characteristic.

The exclusively axial guidance of the threaded pin in the sliding bearing of the brush handle can be provided by radial projections on the threaded pin which engage in longitudinally directed recesses of the sliding bearing, allowing only axial mobility.

An angle of rotation of 180° is sufficient for securing the brush head on the brush handle by means of a multi-start thread.

The sliding bearing in the brush handle for the threaded pin and the threaded hole in the brush head are preferably composed of the same material of which the brush handle and the brush head are respectively composed, and are produced integrally with these. On the other hand, the sliding bearing and the threaded hole can also be formed by inserted sleeves which are secured in corresponding axial bores of the brush handle and brush head respectively.

Other particular embodiments of the invention are set out in claims 7, 9-11, 13-17.

The invention is explained in greater detail below with reference to the schematic drawing of several illustrative embodiments, in which:
- Fig. 1: shows a bottom view of a toothbrush with mounted brush head,
- Fig. 2: shows the toothbrush according to Fig. 1 in a partially sectioned view along the longitudinal centre line,
- Fig. 3: shows the toothbrush in accordance with Fig. 2 with the brush head removed and a sliding bearing sleeve for a threaded pin in partially broken-away representation,
- Figs. 4 and 5: show two different modified embodiments of the threaded pin with a prestressing device in a section taken perpendicularly through the longitudinal centre line and in partially broken-away representation,
- Fig. 6A and Fig. 6B: show a view of the rear end of the brush head in accordance with B-B in Fig. 3 in an insertion position and in the operating position,
- Fig. 7A and Fig. 7B: show a view of the rear end of the brush head similar to that in Fig. 6B, with a two-start or three-start thread,
- Fig. 8: shows a view A-A in Fig. 3, with an inserted sleeve for the threaded pin and
- Fig. 9: shows a view similar to A-A in Fig. 3 but with a sliding bearing for the threaded pin, the said sliding bearing being integrated into the brush handle.

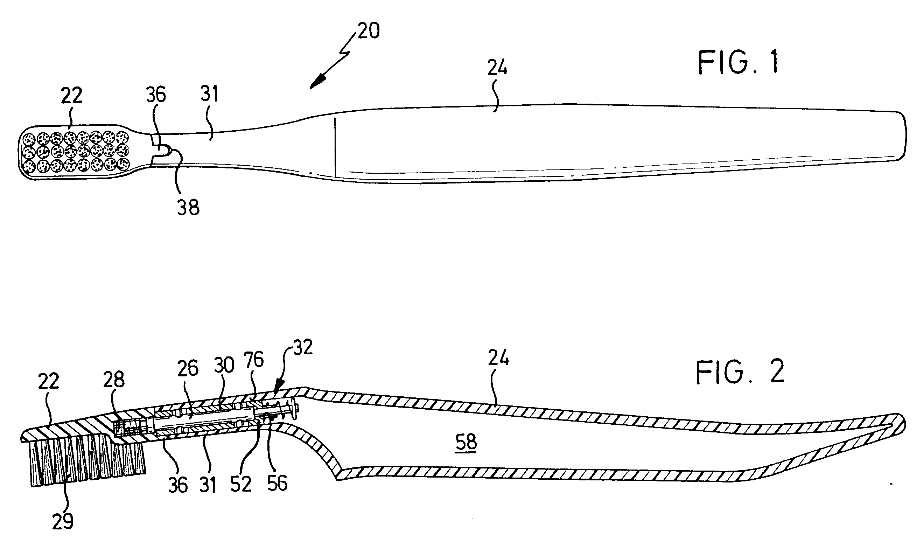

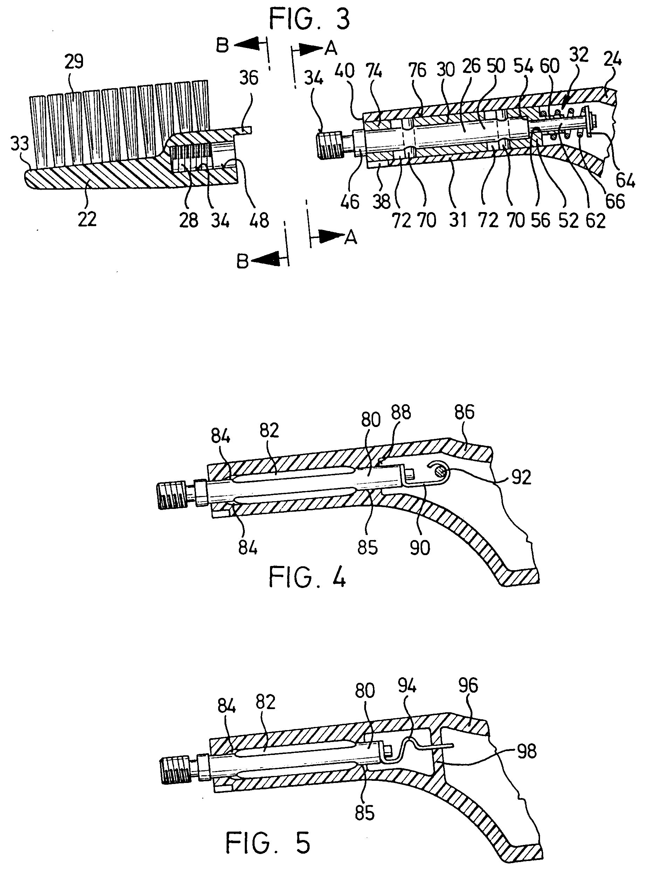

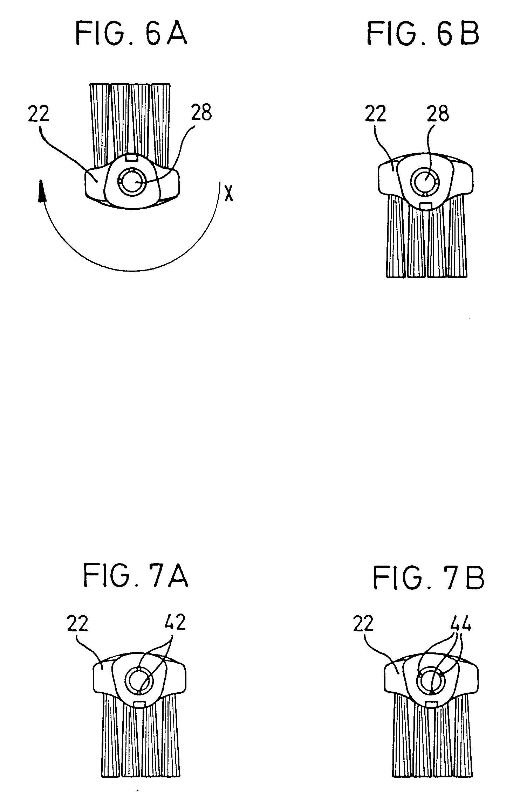

The drawings illustrate a toothbrush 20, the brush head 22 of which is removably secured on the brush handle 24. In accordance with Figs. 2 and 3, a threaded pin 26, preferably composed of plastic, which projects from the front end of the brush handle 24, that end which faces the brush head 22, can be screwed into an integral threaded hole 28 which is arranged in a reinforced part of a bristle bed 33, the said part accommodating the bristles 29 of the brush head 22, in the rear end of the brush head 22, that end which faces the brush handle 24. According to the present invention, the threaded pin 26 is mounted in an axial sliding bearing 30 in the front end of a neck 31 of the brush handle 24 in such a way that it can be moved to a limited extent axially out of the front end of the brush handle 24, counter to the force of a prestressing device 32, but cannot be rotated. At its front end, the threaded pin 26 is provided with a thread 34 which can be screwed into the threaded hole 28 of the brush head 22. Projecting axially from the rear end of the brush head 22, on the side of the bristles 29, is a stop catch 36, to which there corresponds an axial recess 38 in the front end of the brush handle 24. When the brush head 22 is screwed on, the stop catch 36 comes to rest against the end face 40 of the front end of the brush handle 24 after a small angle of rotation. If the screw-on movement of the brush head 22 is continued or a corresponding screw-in movement of the brush handle 24 into the brush head 22 is performed, the threaded pin 26 is pulled out of the front end of the brush handle 24 counter to a prestressing device 32 in accordance with the thread pitch, until the stop catch 36 engages in the recess 38 at the front end of the brush handle 24 and assumes its non-rotatable working position in which it is braced axially in relation to the brush handle 24. If the brush head 22 is to be replaced by another, new brush head, the brush head need only be pulled axially away from the end face 40 of the front end of the brush handle 24 by the length of the stop catch 36, counter to the force of the prestressing device 32, in order to unscrew the brush handle 24 from the thread 34 in the opposite direction of rotation. Fig. 6A depicts the starting position of the brush head 22 for its mounting on the brush handle 24 as well as an arrow X extending over 180°, the said arrow indicating that a half rotation of the brush head 22 for its mounting on the brush handle 24 is sufficient to enable it to assume the working position in accordance with Fig. 6B. As Fig. 7A and Fig. 7B show, a two-start thread 42 or a three-start thread 44 are to be preferred for connecting the brush head 22 and the brush handle 24. The thread 34 and the centring ring 46 expediently have the same diameter.

From Figs. 2 and 3, it can be seen that a centring ring 46 is arranged at the front end of the threaded pin 26, at an axial distance from the thread 34. Provided in the region of the mouth of the threaded hole 28 in the brush head 22 is a smooth cylindrical portion 48 of the threaded hole 28 for receiving the centring ring 46. The diameters of the thread 34 and of the centring ring 46 of the threaded pin 26 are larger than the shank 50 of the threaded pin, which is displaceably mounted in the brush handle 24. The thread 34 and the centring ring 34 expediently have the same diameter.

As Figs. 2 and 3 furthermore show, the sliding bearing 30 in the brush handle 24 for the threaded pin 26 is bounded by a transverse wall 52 which serves as a stop for an annular shoulder 54 on the inner end of the threaded pin 26. The transverse wall 52 is provided with an axial bore 56, which has a smaller diameter than the shank 50 of the threaded pin 26 and continues in a guide sleeve 60 towards the inner cavity 58 of the brush handle 24. A guide rod 62 extends through this bore 56 in the transverse wall 52 and through the guide sleeve 60 from that end of the shank 50 of the threaded pin 26 which forms the annular shoulder 54, a supporting disc 64 being secured on the outer end of this guide rod 62. The prestressing device 32, which, in the illustrative embodiment of Figs. 2 and 3, is designed as a helical compression spring, is guided on the guide sleeve 60 of the transverse wall 52 and is supported by its two ends between the transverse wall 52 and the supporting disc 68, with the result that the threaded pin 26 is continuously prestressed in the direction of the transverse wall 52.

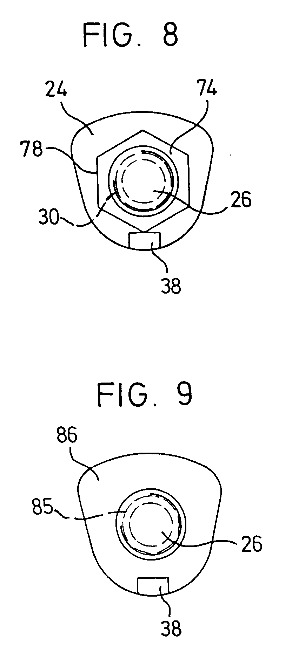

The shank 50 of the threaded pin 26 is provided with radial projections which engage in longitudinally directed recesses of the sliding bearing 30, allowing only axial mobility. According to Figs. 2 and 3, the radial projections of the shank 50 comprise two transverse pins 70 arranged at an axial distance from one another, which project radially from the shank 50 of the threaded pin 26 and engage in elongated slots 72 which only permit axial displacement and not rotation of the threaded pin 26. According to the illustrative embodiment in Figs. 2 and 3, the diametrically opposite elongated slots 72 for the transverse pins 70 are provided in an inserted sleeve 74 which is inserted into a cylindrical bore 76 in the front end of the brush handle 24 and is arranged therein in a manner which prevents axial displacement and fixed in terms of rotation. The inserted sleeve 74 expediently has a polygonal external profile 78, as Fig. 8 shows.

According to another embodiment in Figs. 4 and 5, a threaded pin 80 is provided with longitudinal ribs 82 which are distributed at angular intervals over the circumference and engage with limited longitudinal displaceability in corresponding longitudinal grooves 84 of a sliding bearing 85 in the brush handle 86, the said longitudinal grooves 84 being delimited at the ends and being moulded directly in the material of a brush handle 86, integrally with the latter. In this case, the threaded pin 80 passes with the same diameter through the front end and a transverse wall 88 of the brush handle 86, which are likewise an integral part of the brush handle 86. Secured on the inner end of the threaded pin 80, which protrudes from the transverse wall 88, is one end of a leaf spring 90 which forms the prestressing device, its other, curved end being placed around a transverse peg 92 in the brush handle 86.

Fig. 5 shows a similar embodiment to that in Fig. 4, identical parts thus being provided with identical reference numerals to those in Fig. 4. As in Fig. 4, a single leaf spring 94 is secured on the inner end of the threaded pin 80 but is then oriented in an S shape towards the interior of a brush handle 96. The other end of the leaf spring 94, which extends axially to the threaded pin 80, is fixed in a transverse wall 98 of the brush handle 86.

The various brush handle embodiments described above comprise hollow handle longitudinal halves produced by injection moulding, into which, as has been described, either the inserted sleeves for the sliding bearing of the threaded pin, the latter likewise preferably being composed completely of plastic, are inserted or in which the sliding bearings are integrally moulded from the plastic material of the brush handle halves by injection, before the associated halves of the thread are firmly welded together, e.g. by high-frequency welding. It should also be understood that it is also possible, when the brush head is produced by injection moulding of plastics, for the threaded hole with the associated thread to be integrally moulded or, alternatively, for the threaded hole likewise to be formed by a sleeve around which the brush head is moulded or which is inserted into a corresponding bore in the brush head after the moulding of the brush head. The hollow configuration of the brush handle saves material and reduces the weight of the said handle, making possible more sensitive cleaning of the teeth with the toothbrush. If required, the threaded pin can be arranged in the brush head and the threaded hole in the brush handle, although the embodiments described above are generally to be preferred.

In all the cases described, the strength of the spring can be designed so that it is impossible for small children to separate the brush head from the brush handle. The prestressing spring can also be manufactured from plastic.

### List of reference numerals

- 20: Toothbrush
- 22: Brush head
- 24: Brush handle
- 26: Threaded pin
- 28: Threaded hole
- 29: Bristles
- 30: Sliding bearing
- 31: Handle neck
- 32: Prestressing device
- 33: Bristle bed
- 34: Thread
- 36: Stop catch
- 38: Recess
- 40: End face
- 42: Two-start thread
- 44: Three-start thread
- 46: Centring ring
- 48: Smooth cylindrical portion
- 50: Shank
- 52: Transverse wall
- 54: Annular shoulder
- 56: Axial bore
- 58: Cavity
- 60: Guide sleeve
- 62: Guide rod
- 64: Supporting disc
- 66: Helical compression spring
- 70: Transverse pin
- 72: Elongated slots
- 74: Inserted sleeve
- 76: Cylindrical bore
- 78: External profile
- 80: Threaded pin
- 82: Longitudinal ribs
- 84: Longitudinal grooves
- 85: Sliding bearing
- 86: Brush handle
- 88: Transverse wall
- 90: Leaf spring
- 92: Transverse peg
- 94: Leaf spring
- 96: Brush handle
- 98: Transverse wall

## Claims

1. Toothbrush, the brush head (22) of which is removably secured on the brush handle (24), it being possible to screw a threaded pin (26) protruding from the front end of the brush handle (24), that end which faces the brush head (22), in a manner fixed against twisting into a threaded hole (28) in the rear end of the brush head (22), that end which faces the brush handle (24),
the threaded pin (26) is provided at its front end with a thread (34) which can be screwed into the threaded hole (28) of the brush head (22), a stop catch projecting axially from the rear end of the brush head (22), to which catch there corresponds an axial recess (38) in the front end of the brush handle (24), with the result that, when the brush head (22) is screwed onto the threaded pin (26), the brush head (22) is supported on the front end of the brush handle (24) by means of the stop catch (36), characterized in that the threaded pin (26) is mounted in an axial sliding bearing (30) in the front end of the brush handle (24) in such a way that it can be moved to a limited extent axially out of the brush handle (24), counter to the force of a prestressing device (32), but cannot be rotated, and the threaded pin (26) can be pulled out counter to the action of the prestressing device (32) until the stop catch (36) engages in the recess (38) in the brush handle (24).

2. Toothbrush according to Claim 1, characterised in that the front end of the brush handle (24), which accommodates the sliding bearing (30), is formed by that end of a brush-handle neck (31) which adjoins the brush head (22), and the threaded hole is integrated into a bristle bed which accommodates the bristles (29) of the brush head (22).

3. Toothbrush according to Claim 1, characterised in that a centring ring (46) is arranged at an axial distance from the thread (34), at the front end of the threaded pin (26), and a smooth cylindrical portion (48) of the threaded hole (28), the said portion being situated in the region of the mouth of the threaded hole (28) in the brush head (22), serves to receive the centring ring (46).

4. Toothbrush according to Claim 3, characterised in that the diameters of the thread (34) and of the centring ring (46) of the threaded pin (26) are larger than the shank (50) of the threaded pin (26), which is displaceably mounted in the brush handle (24).

5. Toothbrush according to Claim 4, characterised in that the thread (34) and the centring ring (46) have the same diameter.

6. Toothbrush according to one of Claims 1 to 5, characterised in that the axial sliding bearing (30) for the threaded pin (26) in the brush handle (24) is bounded by a transverse wall (52) which serves as a stop for at least one stop element on the threaded pin (26), the rear end of which passes axially through a bore (56) in the transverse wall (52) and which is connected to one part of the prestressing device, the other part of which is secured in the brush handle.

7. Toothbrush according to Claim 6, characterised in that the rear end of the threaded pin (26), which protrudes from the transverse wall (52) in the brush handle (24), bears a supporting disc (64) at its end, the ends of a helical compression spring (66), as prestressing device, arranged on the rear end (62) of the threaded pin (26) being supported on the supporting disc (64) and the transverse wall (52).

8. Toothbrush according to one of Claims 1 to 6, characterised in that the shank of the threaded pin is provided with radial projections which engage in longitudinally directed recesses with closed ends in the wall of the sliding bearing, allowing only axial mobility.

9. Toothbrush according to Claim 8, characterised in that the radial projections on the shank (50) of the threaded pin (26) comprise transverse pins (70) arranged at an axial distance from one another, which project radially from the threaded pin (26).

10. Toothbrush according to Claim 8, characterised in that the radial projections of the shank (50) comprise longitudinal ribs (82) which are distributed over the circumference of the said shank and engage with exclusively axial displaceability in corresponding longitudinal grooves (84) of the sliding bearing (85).

11. Toothbrush according to Claim 1, characterised in that the stop catch (36) projects in the central longitudinal direction of the brush head (22) on that side of the brush head which accommodates the bristles, and is moulded like a tongue, and the recess (38) is arranged on that side of the brush handle (24) which has the bristles.

12. Toothbrush according to Claim 1, characterised in that an angle of rotation of 180° is provided for securing the brush head (22) on the brush handle (24).

13. Toothbrush according to Claim 1, characterised in that a multi-start thread (42; 44) is provided for the thread of the threaded pin and the threaded hole of the brush head.

14. Toothbrush according to Claim 1, characterised in that the sliding bearing (30) for the threaded pin (26) and the thread (34) of the threaded hole (28) are composed of the material of the brush handle (24) and of the brush head (22), respectively, and are moulded integrally with these.

15. Toothbrush according to Claim 5, characterised in that one end of a tension spring (90; 94) is connected to the rear end of the threaded pin (80) and the other end of the tension spring is anchored in the brush handle (24).

16. Toothbrush according to one of Claims 1 to 4, characterised in that the sliding bearing for the threaded pin (26) in the brush handle (24) and/or the threaded hole (28) in the brush head (22) are in each case formed by inserted sleeves (74), which are secured in corresponding axial cylindrical bores (76) of the brush handle (86) and of the brush head (22) respectively.

17. Toothbrush according to Claim 15, characterised in that the cross-section of the outer circumference of the inserted sleeves (74) is polygonal.

## Patentansprüche

1. Zahnbürste, deren Bürstenkopf (22) an dem Bürstengriff (24) abnehmbar befestigt ist, wobei ein aus dem vorderen Ende des Bürstengriffes (24) vorstehender, dem Bürstenkopf (22) zugekehrter Gewindestift (26) in ein Gewindeloch (28) in dem dem Bürstengriff (24) zugekehrten hinteren Ende des Bürstenkopfes (22) verdrehungsfest einschraubbar ist, wobei der Gewindestift (26) an seinem vorderen Ende mit einem Gewinde (34) versehen ist, das in das Gewindeloch (28) des Bürstenkopfes (22) eingeschraubt werden kann, ein Arretierungsnocken von dem hinteren Ende des Bürstenkopfes (22) axial vorsteht, wobei dem Arretierungsnocken eine axiale Ausnehmung (38) in dem vorderen Ende des Bürstengriffes (24) entspricht, so daß, wenn der Bürstenkopf (22) auf den Gewindestift (26) aufgeschraubt wird, der Bürstenkopf (22) an dem vorderen Ende des Bürstengriffes (24) mittels des Arretierungsnockens (36) abgestützt ist, dadurch gekennzeichnet, daß der Gewindestift (26) in einem axialen Gleitlager (30) in dem vorderen Ende des Bürstengriffes (24) derart angeordnet ist, daß er aus dem Bürstengriff (24) gegen die Wirkung einer Vorspannvorrichtung (32) bis zu einem begrenzten Ausmaß axial bewegt, aber nicht gedreht werden kann, und daß der Gewindestift (26) gegen die Wirkung der Vorspannvorrichtung (32) herausgezogen werden kann, bis der Arretierungsnocken (36) in die Ausnehmung (38) in dem Bürstengriff (24) eingreift.

2. Zahnbürste nach Anspruch 1, dadurch gekennzeichnet,
daß das das Gleitlager (30) aufnehmende Vorderende des Bürstengriffes (24) von dem an den Bürstenkopf (22) angrenzenden Ende eines Bürstengriffhalses (31) gebildet ist und das Gewindeloch in einem die Borsten (29) des Bürstenkopfes (22) aufnehmenden Borstenbett integriert ist.

3. Zahnbürste nach Anspruch 1, dadurch gekennzeichnet, daß ein Zentrierring (46) im axialen Abstand von dem Gewinde (34) am Vorderende des Gewindestiftes (26) angeordnet ist und ein im Bereich der Mündungsöffnung des Gewindelochs (28) im Bürstenkopf (22) liegender glattzylindrischer Abschnitt (48) des Gewindelochs (28) zur Aufnahme des Zentrierringes (46) dient.

4. Zahnbürste nach Anspruch 3, dadurch gekennzeichnet, daß die Durchmesser des Gewindes (34) und des Zentrierringes (46) des Gewindestiftes (26) größer als dessen im Bürstengriff (24) verschiebbar gelagerter Schaft (50) bemessen sind.

5. Zahnbürste nach Anspruch 4, dadurch gekennzeichnet, daß das Gewinde (34) und der Zentrierring (46) denselben Durchmesser aufweisen.

6. Zahnbürste nach einem der Ansprüche 1 bis 5, dadurch gekennzeichnet, daß das axiale Gleitlager (30) für den Gewindestift (26) im Bürstengriff (24) durch eine Querwand (52) begrenzt ist, die als Anschlag für mindestens ein Anschlagelement am Gewindestift (26) dient, welcher mit seinem hinteren Ende eine Bohrung (56) der Querwand (52) axial durchsetzt und mit einem Teil der Vorspannvorrichtung verbunden ist, deren anderer Teil im Bürstengriff befestigt ist.

7. Zahnbürste nach Anspruch 6, dadurch gekennzeichnet, daß das aus der Querwand (52) im Bürstengriff (24) herausragende hintere Ende des Gewindestiftes (26) an seinem Ende eine Stützscheibe (64) trägt, wobei sich die Enden einer auf dem hinteren Ende (62) des Gewindestiftes (26) angeordnete Schraubendruckfeder (66) als Vorspannvorrichtung auf der Stützscheibe (64) und der Querwand (52) abstützen.

8. Zahnbürste nach einem der Ansprüche 1 bis 6, dadurch gekennzeichnet, daß der Schaft des Gewindestifts mit radialen Vorsprüngen versehen ist, die in längs gerichtete, an den Enden geschlossene Ausnehmungen in der Gleitlagerwandung ausschließlich axial beweglich eingreifen.

9. Zahnbürste nach Anspruch 8, dadurch gekennzeichnet, daß die radialen Vorsprünge am Schaft (50) des Gewindestiftes (26) aus im axialen Abstand voneinander angeordneten Querbolzen (70) bestehen, die vom Gewindestift (26) radial vorstehen.

10. Zahnbürste nach Anspruch 8, dadurch gekennzeichnet, daß die radialen Vorsprünge des Schaftes (50) aus über den Umfang desselben verteilt angeordneten Längsrippen (82) bestehen, die in entsprechende Längsrillen (84) des Gleitlagers (85) ausschließlich axial verschiebbar eingreifen.

11. Zahnbürste nach Anspruch 1, dadurch gekennzeichnet, daß der Arretierungsnocken (36) auf der die Borsten aufnehmenden Seite des Bürstenkopfes (22) in Mittellängsrichtung desselben vorsteht und zungenartig geformt ist, und die Ausnehmung (38) an der die Borsten aufweisenden Seite des Bürstengriffes (24) angeordnet ist.

12. Zahnbürste nach Anspruch 1, dadurch gekennzeichnet, daß ein Drehwinkel von 180° für das Befestigen des Bürstenkopfes (22) auf den Bürstengriff (24) vorgesehen ist.

13. Zahnbürste nach Anspruch 1, dadurch gekennzeichnet, daß für das Gewinde des Gewindestiftes und das Gewindeloch des Bürstenkopfes ein mehrgängiges Gewinde (42; 44) vorgesehen ist.

14. Zahnbürste nach Anspruch 1, dadurch gekennzeichnet, daß das Gleitlager (30) für den Gewindestift (26) und das Gewinde (34) des Gewindelochs (28) aus dem Material des Bürstengriffes (24) bzw. des Bürstenkopfes (22) bestehen und mit diesen ganzteilig geformt sind.

15. Zahnbürste nach Anspruch 5, dadurch gekennzeichnet, daß mit dem hinteren Ende des Gewindestiftes (80) ein Ende einer Zugfeder (90; 94) verbunden ist, deren anderes Ende im Bürstengriff (24) verankert ist.

16. Zahnbürste nach einem der Ansprüche 1 bis 4, dadurch gekennzeichnet, daß das Gleitlager für den Gewindestift (26) im Bürstengriff (24) und/oder das Gewindeloch (28) im Bürstenkopf (22) jeweils von Einsatzhülsen (74) gebildet sind, die in entsprechenden axialen zylindrischen Bohrungen (76) des Bürstengriffes (86) bzw. Bürstenkopfes (22) befestigt sind.

17. Zahnbürste nach Anspruch 15, dadurch gekennzeichnet, daß der Querschnitt des Außenumfangs der Einsatzhülsen (74) mehrkantig ist.

## Revendications

1. Brosse à dents dont la tête (22) de la brosse est fixée de façon amovible sur le manche (24) de la brosse, où il est possible de visser un axe fileté (26) dépassant de l'extrémité avant du manche (24) de la brosse, cette extrémité faisant face à la tête (22) de la brosse, de manière fixé contre la torsion dans un trou fileté (28) dans l'extrémité arrière de la tête (22) de la brosse, cette extrémité faisant face au manche (24) de la brosse,
l'axe fileté (26) étant doté, sur son extrémité avant, d'un filetage (34) qui peut être vissé dans le trou fileté (28) de la tête (22) de la brosse, un ergot de butée faisant saillie axialement par rapport à l'extrémité arrière de la tête (22) de la brosse, ergot auquel correspond un évidement axial (38) dans l'extrémité avant du manche (24) de la brosse, le résultat étant que, lorsque la tête (22) de la brosse est vissée sur l'axe fileté (26), la tête (22) de la brosse est supportée sur l'extrémité avant du manche (24) de la brosse au moyen de l'ergot de butée (36), caractérisée en ce que l'axe fileté (26) est monté dans un palier (30) à glissement axial dans l'extrémité avant du manche (24) de la brosse, de façon telle qu'il puisse être déplacé jusqu'à une étendue limitée axialement hors du manche (24) de la brosse, contre la force d'un dispositif (32) de précontrainte, mais en ce qu'il ne peut pas être en rotation, l'axe fileté (26) pouvant être enlevé en s'opposant à l'action du dispositif (32) de précontrainte jusqu'à ce que l'ergot de butée (36) s'engage dans l'évidement (38) du manche (24) de la brosse.

2. Brosse à dents selon la revendication 1, caractérisée en ce que l'extrémité avant du manche (24) de la brosse, qui loge le palier à glissement (30), est formée par cette extrémité d'un rétrécissement (31) du manche de la brosse qui est contigu à la tête (22) de la brosse, le trou fileté étant intégré dans un lit de poils qui loge les poils (29) de la tête (22) de la brosse.

3. Brosse à dents selon la revendication 1, caractérisée en ce qu'une bague de centrage (46) est disposée à une distance axiale du filetage (34), au niveau de l'extrémité avant de l'axe fileté (26), et une partie cylindrique lisse (48) du trou fileté (28), ladite partie étant située dans la région de l'ouverture du trou fileté (28) dans la tête (22) de la brosse, sert à recevoir la bague de centrage (46).

4. Brosse à dents selon la revendication 3, caractérisée en ce que les diamètres du filetage (34) et de la bague de centrage (46) de l'axe fileté (26) sont plus grands que la tige (50) de l'axe fileté (26) qui est monté de façon mobile dans le manche (24) de la brosse.

5. Brosse à dents selon la revendication 4, caractérisée en ce que le filetage (34) et la bague de centrage (46) ont le même diamètre.

6. Brosse à dents selon l'une quelconque des revendications 1 à 5, caractérisée en ce que le palier (30) à glissement axial pour l'axe fileté (26) dans le manche (24) de la brosse est limité par une paroi transversale (52) qui sert de butée pour au moins un élément d'arrêt sur l'axe fileté (26) dont l'extrémité arrière traverse axialement un perçage (56) dans la paroi transversale (52), et qui est reliée à une partie du dispositif de précontrainte, dont l'autre partie est fixée dans le manche de la brosse.

7. Brosse à dents selon la revendication 6, caractérisée en ce que l'extrémité arrière de l'axe fileté (26) qui dépasse de la paroi transversale (52) dans le manche (24) de la brosse, porte un disque d'appui (64) à son extrémité, les extrémités d'un ressort de compression (66) en spirale, servant de dispositif de précontrainte, disposé sur l'extrémité arrière (62) de l'axe fileté (26) supporté sur le disque d'appui (64) et sur la paroi transversale (52).

8. Brosse à dents selon l'une quelconque des revendications 1 à 6, caractérisée en ce que la tige de l'axe fileté est dotée de saillies radiales qui s'engagent dans des évidements orientés longitudinalement ayant des extrémités fermées dans la paroi du palier à glissement, ne permettant que la mobilité axiale.

9. Brosse à dents selon la revendication 8, caractérisée en ce que les saillies radiales sur la tige (50) de l'axe fileté (26) comprennent des axes transversaux (70) disposés à une distance axiale les uns des autres, qui font saillie radialement par rapport à l'axe fileté (26).

10. Brosse à dents selon la revendication 8, caractérisée en ce que les saillies radiales de la tige (50) comprennent des nervures longitudinales (82) qui sont distribuées sur la circonférence de ladite tige et s'engagent dans des gorges longitudinales (84) correspondantes du palier à glissement (85) en ayant une capacité de déplacement exclusivement axial.

11. Brosse à dents selon la revendication 1, caractérisée en ce que l'ergot de butée (36) dépasse dans la direction longitudinale centrale de la tête (22) de la brosse, sur ce côté de la tête de la brosse qui loge les poils et qui est moulé comme une langue, l'évidement (38) étant disposé sur ce côté du manche (24) de la brosse qui comporte les poils.

12. Brosse à dents selon la revendication 1, caractérisée en ce qu'un angle de rotation de 180° est prévu pour fixer la tête (22) de la brosse sur le manche (24) de la brosse.

13. Brosse à dents selon la revendication 1, caractérisée en ce qu'un filetage multiple (42 ; 44) est prévu pour le filetage de l'axe fileté et du trou fileté de la tête de la brosse.

14. Brosse à dents selon la revendication 1, caractérisée en ce que le palier à glissement (30) pour l'axe fileté (26) et le filetage (34) du trou fileté (28) sont composés du matériau, respectivement, du manche (24) de la brosse et de la tête (22) de la brosse, et sont moulés en étant solidaires de ces éléments.

15. Brosse à dents selon la revendication 5, caractérisée en ce qu'une extrémité d'un ressort de tension (90 ; 94) est reliée à l'extrémité arrière de l'axe fileté (80), l'autre extrémité du ressort de tension étant fixée dans le manche (24) de la brosse.

16. Brosse à dents selon l'une quelconque des revendications 1 à 4, caractérisée en ce que le palier à glissement pour l'axe fileté (26) dans le manche (24) de la brosse et/ou le trou fileté (28) dans la tête (22) de la brosse sont, dans chaque cas, formés par des manchons insérés (74) qui sont fixés, respectivement, dans des perçages (76) cylindriques axiaux correspondants du manche (86) de la brosse et de la tête (22) de la brosse.

17. Brosse à dents selon la revendication 15, caractérisée en ce que la section de la circonférence extérieure des manchons insérés (74) est polygonale.
